# FASCICULE DE BREVET EUROPEEN

(11) **EP 0 729 869 B1**
(45) Date de publication et mention de la délivrance du brevet: **28.04.1999**
(21) Numéro de dépôt: 96400370.1
(22) Date de dépôt: 22.02.1996
(51) Int. Cl.: B60S 1/32, B60S 1/52

(54) **Essuie-glace pour véhicule automobile comportant un bras en matière plastique rigide et léger**
Kraftfahrzeug-Scheibenwischer mit Wischerarm aus steifem, leichtem Kunststoff
Windscreen wiper for a motor vehicle comprising an arm made from light and rigid plastic material

(30) Priorité: 28.02.1995 FR 9502552
(43) Date de publication de la demande: 04.09.1996
(73) Titulaire: VALEO SYSTEMES D'ESSUYAGE, 78321 La Verrière (FR)
(72) Inventeur: Lisiecki, Bruno, 92320 Châtillon (FR); Cervantes, Géraldine, 75014 Paris (FR); Tallut, Robert, 92130 Issy-les-Moulineaux (FR)
(74) Mandataire: Kohn, Philippe

(56) Documents cités:
- EP-A- 0 208 960
- WO-A-92/21537
- DE-B- 1 087 482
- FR-A- 2 646 801

## Description

L'invention concerne un essuie-glace pour véhicule automobile.

L'invention concerne plus particulièrement un essuie-glace pour véhicule automobile, du type dans lequel un bras en matière plastique comporte une extrémité d'articulation sur une tête d'entraînement en balayage alterné, une extrémité d'accrochage d'un balai d'essuyage d'une vitre et un corps longitudinal qui relie ces deux extrémités, du type dans lequel le bras comporte également un logement destiné à recevoir un ressort de pression d'essuyage, le logement étant agencé entre le corps longitudinal et l'extrémité d'articulation, et délimité par une paroi longitudinale qui comporte deux ailes latérales parallèles réunies par un dos supérieur, et du type dans lequel le corps longitudinal comporte une cavité interne réalisée par injection de la matière plastique en combinaison avec un gaz neutre et dans lequel la paroi du logement comporte une cavité interne qui est réalisée par injection de la matière plastique en combinaison avec un gaz neutre.

Un tel type d'essuie-glace est décrit et représenté dans le document FR-B-2.646.801.

L'essuie-glace décrit et représenté dans ce document possède un bras longitudinal en matière plastique dans lequel est aménagé un tube obtenu par injection-soufflage ou par injection coaxiale de gaz.

Ce tube forme une rampe d'arrosage pour projeter du produit de lavage sur la vitre à essuyer au travers de petits orifices transversaux qui relient le tube à la face du bras en regard de la vitre.

Cette conception d'un essuie-glace permet d'obtenir à moindre coût une rampe d'arrosage intégrée à l'essuie-glace.

Toutefois, la présence de ce tube creux à l'intérieur du bras d'essuie-glace ne peut que diminuer la rigidité du bras, notamment en flexion, et de ce fait ne peut convenir que pour des bras d'essuie-glaces de petite taille et faiblement sollicités.

L'invention a donc pour but de proposer un essuie-glace comportant un bras en matière plastique qui est léger mais rigide.

Dans ce but, l'invention propose un essuie-glace du type vu précédemment, caractérisé en ce que la cavité interne de la paroi du logement communique avec la cavité interne du corps longitudinal du bras.

Selon des modes de réalisation de l'invention :
- l'injection du gaz neutre est réalisée dans un chant inférieur d'au moins une des deux ailes latérales du logement ;
- l'injection du gaz neutre est réalisée dans chacune des deux ailes latérales pour réaliser une cavité symétrique dans chaque aile ;
- le corps longitudinal comporte deux faces latérales opposées qui se prolongent vers le bas, au-delà d'une face inférieure du corps, par deux flancs qui délimitent latéralement un évidement agencé en regard de la vitre à essuyer ;
- des nervures de rigidification sont agencées dans au moins une partie de l'évidement et relient les flancs de l'évidement à la face inférieure du bras ;
- des griffes d'accrochage d'une conduite d'un dispositif d'arrosage de la vitre sont agencées dans l'évidement et sont réalisées venues de matière avec le bras ;
- le bras possède un profil coudé ;
- les nervures de rigidification sont agencées au niveau de la partie coudée du bras.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de la face inférieure d'un bras d'essuie-glace suivant l'invention ;
- la figure 2 est une vue en coupe longitudinale suivant la ligne 2-2 de la figure 1 d'un tel bras d'essuie-glace ;
- les figures 3, 4 et 5 sont des vues en coupe transversale et à plus grande échelle d'un bras essuie-glace selon l'invention suivant les lignes respectives 3-3, 4-4 et 5-5 de la figure 1 ;
- la figure 6 est une vue de la face inférieure d'un second mode de réalisation d'un bras d'essuie-glace selon l'invention ;
- la figure 7 est une vue en coupe longitudinale d'un tel bras d'essuie-glace ;
- la figure 8 représente en perspective une coupe d'un tel bras d'essuie-glace suivant la ligne 8-8 de la figure 7.

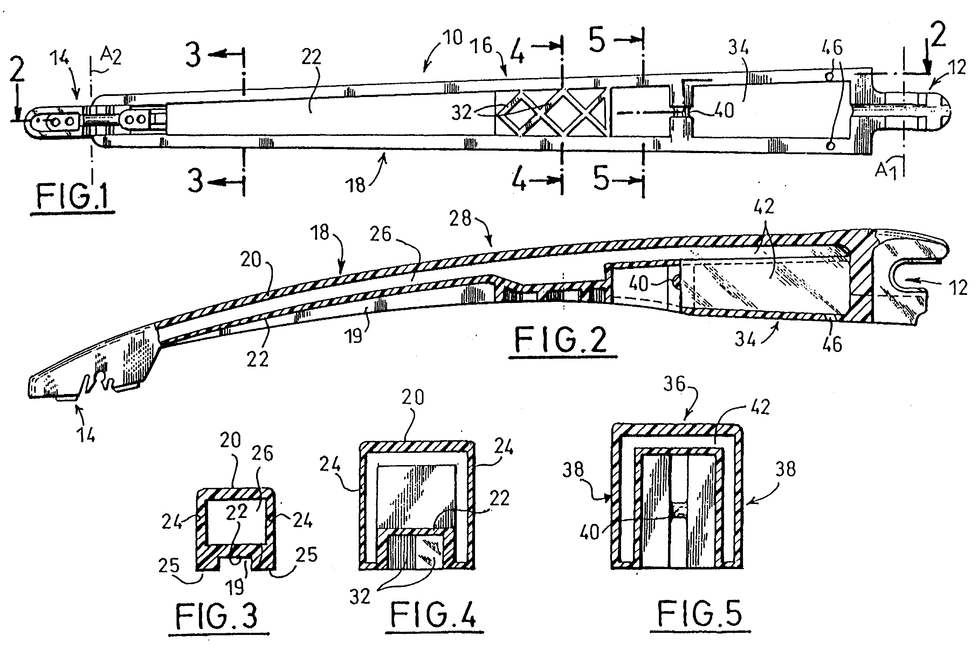

Le bras d'essuie-glace 10 en matière plastique qui est représenté sur les figures 1 et 2 comporte à l'une de ses extrémités longitudinales un talon d'articulation 12 qui permet la fixation et l'articulation du bras 10 sur une tige (non représentée) d'une tête d'entraînement (non représentée) en balayage alterné de l'essuie-glace.

Le talon d'articulation 12 permet ainsi au bras d'essuie-glace 10 d'être articulé autour d'un axe A1 sensiblement parallèle au plan de la vitre à essuyer, ce qui permet notamment de décoller l'essuie-glace de la vitre.

Le bras d'essuie-glace 10 comporte à son autre extrémité longitudinale une tête d'accrochage 14 d'un balai d'essuie-glace (non représenté). Le balai comporte une tige transversale qui est encliquetée sur la tête d'accrochage 14 de manière à pouvoir pivoter autour d'un axe A2 sensiblement parallèle à l'axe A1.

Le talon d'articulation 12 et la tête d'accrochage 14 sont reliés par un corps longitudinal 16 qui est rectiligne dans le mode de réalisation représenté sur les figures mais qui peut adopter un profil coudé pour s'adapter à la géométrie et à l'implantation de l'essuie-glace par rapport à la vitre.

Le corps longitudinal 16 comporte une partie élancée 18, agencée du côté de la tête d'accrochage 14, qui présente, en section, une forme générale de caisson représentée à la figure 3.

Dans cette partie élancée 18, le bras 10 comporte une cavité interne 26 délimitée par des faces supérieure 20 et inférieure 22 et par deux faces latérales parallèles 24 qui se prolongent vers le bas, au-delà de la face inférieure 22, par des flancs latéraux 25 qui délimitent un évidement inférieur 19 en regard de la vitre.

En s'éloignant de la tête d'accrochage 14, la section de la partie élancée 18 augmente de taille tant en hauteur qu'en largeur mais la distance qui sépare la face supérieure 20 de la face inférieure 22 reste sensiblement constante, de sorte que la profondeur de l'évidement inférieur 19 délimité par les deux flancs 25 augmente.

Dans une zone intermédiaire 28 du bras 10, qui prolonge la partie élancée 18 dans la direction du talon d'articulation 12, la face inférieure 22 présente un décrochement vers le bas qui l'éloigne de la face supérieure 20, ce qui augmente la hauteur de la cavité 26 et diminue la profondeur de l'évidement inférieur 19.

Toutefois, dans l'évidement 19 qui subsiste, on a ménagé des nervures de rigidification 32.

Les nervures de rigidification 32, agencées en croisillons, permettent de relier entre eux les flancs 25 de l'évidement 19 et la face inférieure 22 du bras 10 afin d'augmenter de manière significative la rigidité du bras 10 dans la zone intermédiaire 28.

Dans le cas où le bras d'essuie-glace 10 possède un profil coudé, il sera avantageux de prévoir la réalisation du coude au niveau de cette zone intermédiaire 28 pour bénéficier du surcroît de rigidité dans cette zone.

Le bras 10 d'essuie-glace selon l'invention comporte également un logement 34 pour un ressort de pression d'essuyage (non représenté) dont une extrémité est fixée au bras 10 et dont l'autre est fixée à la tête d'entraînement.

Le logement 34 prolonge la zone intermédiaire du bras 10 jusqu'au talon d'articulation 12.

Comme on peut le voir sur la figure 5, le bras 10 présente, au niveau du logement 34, une section transversale en forme de U renversé dont le dos supérieur 36 et des ailes latérales parallèles 38 délimitent le logement 34.

Le logement 34 comporte, non loin de son extrémité opposée au talon d'articulation 12, une tige transversale 40 qui relie les deux ailes 38, sensiblement à mi-hauteur, et qui est prévue pour l'accrochage du ressort sur le bras 10.

Conformément aux enseignements de l'invention, le dos supérieur 36 et les ailes latérales 38 du logement 34 comportent une cavité interne 42 qui est réalisée par injection de gaz au moulage et qui communique avec la cavité 26 de la partie élancée 18 et de la zone intermédiaire 28.

La communication entre les deux cavités 26, 42 permet de les réaliser simultanément par injection de gaz depuis une seule des deux extrémités longitudinales du bras 10.

Le dos supérieur 36 est les ailes 38 se présentent ainsi sous la forme de parois doubles dont les parties externes sont le prolongement de la face supérieure 20 et des faces latérales 24 de la partie élancée 18 et de la zone intermédiaire 28. La partie interne du dos supérieur 36 est le prolongement, avec un décrochement vers le haut, de la face inférieure 22.

Dans l'exemple de réalisation représenté sur les figures, l'injection de gaz est réalisée dans un chant inférieur 44 de chacune des deux ailes 38 du logement 34.

Une telle disposition des points d'injection de gaz permet notamment d'assurer une très bonne symétrie de la cavité 42 et permet par ailleurs un débit de gaz suffisant pour réaliser la cavité 26 de la partie élancée 18 du bras 10.

Toutefois, il peut être prévu de ne réaliser l'injection de gaz que d'un seul côté du bras 10.

L'injection de gaz laisse subsister deux orifices d'injection 46 qui pourront être rebouchés si nécessaire par tout moyen convenable mais qui présentent l'avantage d'être disposés sur une face qui est quasiment invisible lorsque l'essuie-glace est en place.

Une telle conception d'un essuie-glace permet de réaliser un gain de poids et un gain de matière appréciables.

En effet, les seules zones massives, qui sont de dimensions relativement petites, sont le talon d'articulation 12 et la tête d'accrochage 14 qui sont des zones où une solidité maximale est requise car les efforts qui y sont appliqués, au cours du montage notamment, peuvent de loin excéder les seuls efforts dus à l'essuyage.

Le corps longitudinal 16 du bras 10 selon l'invention, n'étant pas soumis à des contraintes locales très importantes, est allégé au maximum tout en bénéficiant d'une très bonne rigidité par l'effet de caisson obtenu grâce au dessin particulier du corps longitudinal 16.

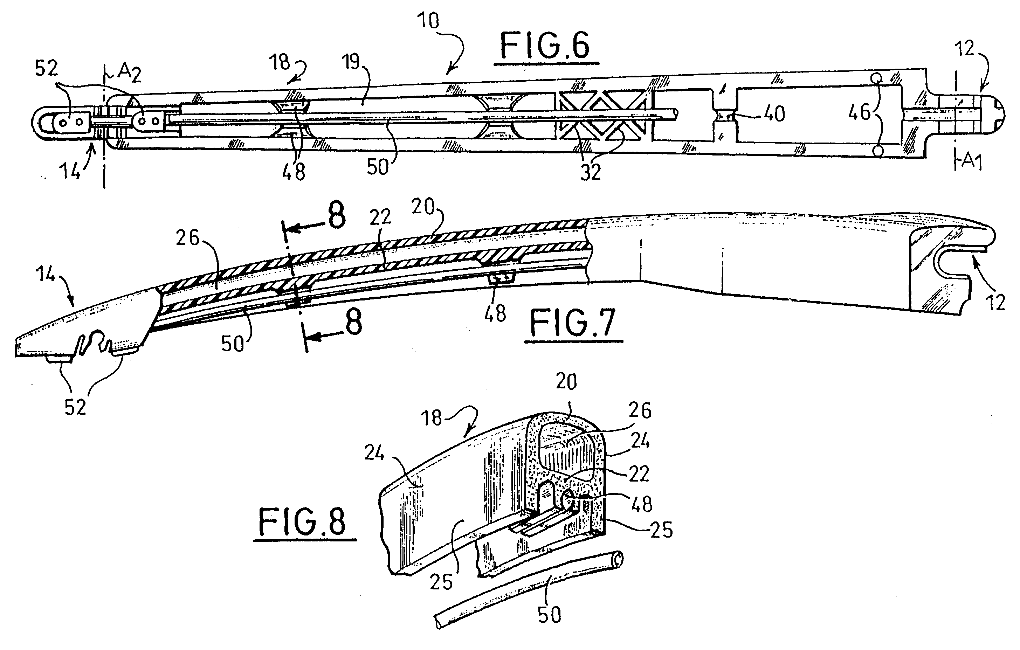

On a représenté sur les figures 6, 7 et 8 une variante de réalisation d'un bras d'essuie-glace 10 selon l'invention dans laquelle le bras 10 comporte des griffes d'accrochage 48 pour une canalisation d'arrosage 50 de la vitre.

La canalisation 50 s'étend le long du bras 10 et alimente deux gicleurs 52 agencés dans la tête d'accrochage 14.

Les griffes d'accrochage 48 sont réalisées venues de matière avec le bras 10 et elles sont disposées sur la face inférieure 22 de la partie élancée 18, dans l'évidement 19.

De plus, grâce aux flancs latéraux 25, les griffes d'accrochage 48 sont invisibles pour l'observateur lorsque l'essuie-glace est en place sur le véhicule.

## Revendications

1. Essuie-glace pour véhicule automobile, du type dans lequel un bras (10) en matière plastique comporte une extrémité d'articulation (12) sur une tête d'entraînement en balayage alterné, une extrémité d'accrochage (14) d'un balai d'essuyage d'une vitre et un corps longitudinal (16) qui relie ces deux extrémités, du type dans lequel le bras (10) comporte également un logement (34) destiné à recevoir un ressort de pression d'essuyage, le logement (34) étant agencé entre le corps longitudinal (16) et l'extrémité d'articulation (12), et délimité par une paroi longitudinale qui comporte deux ailes latérales parallèles (38) réunies par un dos supérieur (36), et du type dans lequel le corps longitudinal (16) comporte une cavité interne (26) réalisée par injection de la matière plastique en combinaison avec un gaz neutre, et dans lequel la paroi du logement (34) comporte une cavité interne (42) qui est réalisée par injection de la matière plastique en combinaison avec un gaz neutre, caractérisé en ce que la cavité interne (42) de la paroi du logement (34) communique avec la cavité interne (26) du corps longitudinal (16) du bras (10).

2. Essuie-glace selon la revendication 1, caractérisé en ce que l'injection du gaz neutre est réalisée dans un chant inférieur (44) d'au moins une des deux ailes latérales (38) du logement (34).

3. Essuie-glace selon la revendication 2, caractérisé en ce que l'injection du gaz neutre est réalisée dans chacune des deux ailes latérales (38) pour réaliser une cavité (42) symétrique dans chaque aile (38).

4. Essuie-glace selon l'une quelconque des revendications précédentes, caractérisé en ce que le corps longitudinal (16) comporte deux faces latérales opposées (24) qui se prolongent vers le bas, au-delà d'une face inférieure (22) du corps (16), par deux flancs (25) qui délimitent latéralement un évidement (19) agencé en regard de la vitre à essuyer.

5. Essuie-glace selon la revendication 4, caractérisé en ce que des nervures (32) de rigidification sont agencées dans au moins une partie de l'évidement (19) et relient les flancs (25) de l'évidement (19) à la face inférieure (22) du bras (10).

6. Essuie-glace selon l'une des revendications 4 ou 5, caractérisé en ce que des griffes d'accrochage (48) d'une conduite (50) d'un dispositif d'arrosage de la vitre sont agencées dans l'évidement (19) et sont réalisées venues de matière avec le bras (10).

7. Essuie-glace selon l'une quelconque des revendications précédentes, caractérisé en ce que le bras (10) possède un profil coudé.

8. Essuie-glace selon la revendication 7 prise en combinaison avec la revendication 5, caractérisé en ce que les nervures (32) de rigidification sont agencées au niveau de la partie coudée du bras (10).

## Claims

1. Wiper for a motor vehicle, of the type in which a plastic arm (10) has an end (12) for articulation on a head driving in alternating sweep, an end (14) for attaching a screen wiper blade and a longitudinal body (16) which connects these two ends, of the type in which the arm (10) also has a housing (34) intended to receive a wiping pressure spring, the housing (34) being arranged between the longitudinal body (16) and the articulation end (12), and delimited by a longitudinal wall which has two parallel lateral flanges (38) connected together by a top web (36), and of the type in which the longitudinal body (16) has an internal cavity (26) produced by the injection of plastic in combination with a neutral gas, and in which the wall of the housing (34) has an internal cavity (42) which is produced by injecting plastic in combination with a neutral gas, characterised in that the internal cavity (42) in the wall of the housing (34) communicates with the internal cavity (26) in the longitudinal body (16) of the arm (10).

2. Wiper according to Claim 1, characterised in that the neutral gas is injected in a bottom edge (44) and at least one of the two lateral flanges (38) of the housing (34).

3. Wiper according to Claim 2, characterised in that the neutral gas is injected in each of the two lateral flanges (38) in order to produce a symmetrical cavity (42) in each flange (38).

4. Wiper according to any one of the preceding claims, characterised in that the longitudinal body (16) has two opposite lateral faces (24) which are extended downwards, beyond a bottom face (22) of the body (16), by two flanks (25) which laterally delimit a hollow (19) arranged opposite the pane to be wiped.

5. Wiper according to Claim 4, characterised in that stiffening ribs (32) are arranged in at least part of the hollow (19) and connect the flanks (25) of the hollow (19) to the bottom face (22) of the arm (10).

6. Wiper according to one of Claims 4 or 5, characterised in that claws (48) for attaching a conduit (50) of a device for spraying the pane are arranged in the hollow (19) and are produced in one piece with the arm (10).

7. Wiper according to any one of the preceding claims, characterised in that the arm (10) has an angled profile.

8. Wiper according to Claim 7 taken in combination with Claim 5, characterised in that the stiffening ribs (32) are arranged at the angled part of the arm (10).

## Patentansprüche

1. Scheibenwischer für Kraftfahrzeuge, bei dem ein Wischerarm (10) aus Kunststoff ein Gelenkende (12) zur Anlenkung an einem Antriebskopf für den Pendelwischantrieb, ein Einsetzende (14) zum Einsetzen eines Wischerblatts zum Wischen einer Scheibe und einen Längskörper (16), der die beiden Enden verbindet, umfaßt, bei dem der Wischerarm (10) außerdem eine Aufnahme (34) enthält, um eine Wischeranpreßfeder aufzunehmen, wobei die Aufnahme (34) zwischen dem Längskörper (16) und dem Gelenkende (12) angeordnet und durch eine Längswand begrenzt ist, die zwei durch einen oberen Rücken (36) verbundene parallele Seitenschenkel (38) umfaßt, wobei der Längskörper (16) eine durch Spritzgießen des Kunststoffs in Verbindung mit der Einblasung eines neutralen Gases ausgeführte innere Aushöhlung (26) aufweist und wobei die Wand der Aufnahme (34) eine innere Aushöhlung (42) aufweist, die durch Spritzgießen des Kunststoffs in Verbindung mit der Einblasung eines neutralen Gases ausgeführt ist, **dadurch gekennzeichnet**, daß die innere Aushöhlung (42)der Wand der Aufnahme (34) mit der inneren Aushöhlung (26) des Längskörpers (16) des Wischerarms (10) in Verbindung steht.

2. Scheibenwischer nach Anspruch 1 , **dadurch gekennzeichnet,** daß die Einblasung des neutralen Gases in einer unteren Schmalseite (44) mindestens eines der beiden Seitenschenkel (38) der Aufnahme (34) erfolgt.

3. Scheibenwischer nach Anspruch 2 , **dadurch gekennzeichnet,** daß die Einblasung des neutralen Gases in jedem der beiden Seitenschenkel (38) erfolgt, um eine symmetrische Aushöhlung (42) in jedem Schenkel (38) auszuführen.

4. Scheibenwischer nach einem der vorangehenden Ansprüche, **dadurch gekennzeichnet**, daß der Längskörper (16) zwei gegenüberliegende Seitenflächen (24) umfaßt, die nach unten, über eine Unterseite (22) des Körpers (16) hinaus, durch zwei Flanken (25) verlängert werden, die eine gegenüber der zu wischenden Scheibe angeordnete Aussparung (19) seitlich begrenzen.

5. Scheibenwischer nach Anspruch 4 , **dadurch gekennzeichnet,** daß Versteifungsrippen (32) in mindestens einem Teil der Aussparung (19) angeordnet sind und die Flanken (25) der Aussparung (19) mit der Unterseite (22) des Wischerarms (10) verbinden.

6. Scheibenwischer nach einem der Ansprüche 4 oder 5, **dadurch gekennzeichnet,** daß Einsetzklemmen (48) zum Einsetzen einer Leitung (50) einer Sprühvorrichtung zum Besprühen der Scheibe in der Aussparung (19) angeordnet und einstückig am Wischerarm (10) angeformt sind.

7. Scheibenwischer nach einem der vorangehenden Ansprüche, **dadurch gekennzeichnet**, daß der Wischerarm (10) ein abgewinkeltes Profil besitzt.

8. Scheibenwischer nach Anspruch 7 in Kombination mit Anspruch 5 , **dadurch gekennzeichnet,** daß die Versteifungsrippen (32) im Bereich des abgewinkelten Teils des Wischerarms (10) angeordnet sind.
